# EUROPEAN PATENT APPLICATION

(11) **EP 4 763 571 A1**
(43) Date of publication of application: **24.06.2026**
(21) Application number: 24220517.7
(22) Date of filing: 17.12.2024
(51) Int. Cl.: B60K 35/10, B60K 35/20, B60K 35/21, B60K 35/26, B60W 50/14, G06N 3/09, G06N 3/092, G06V 20/59, B60W 40/08

(54) **PERSONALIZING AN OUTPUT OF VEHICLE SYSTEMS FOR A VEHICLE CABIN TO OCCUPANTS OF THE VEHICLE**

(71) Applicant: Harman Becker Automotive Systems, Inc., Novi, MI 48377 (US)
(72) Inventor: RIBECKY ARROYO, Sebastian, 81371 München (DE); NIETO ILLESCAS, Alvaro Jesus, 81371 München (DE); VON TÜRCKHEIM, Friedrich, 22587 Hamburg (DE)
(74) Representative: Kraus & Lederer PartGmbB

(57) **Abstract**

A computer implemented method is provided. The method is carried out by a processing entity of a vehicle cabin. The method comprises the steps of receiving, by the processing entity, sensor data from at least one sensor of a vehicle; and applying, by the processing entity, the sensor data to a pre-trained machine learning algorithm for personalising an output provided to the vehicle cabin.

## Description

### Technical Field

The present application relates to a method and a system for personalizing an output for a vehicle cabin such as an audio output, a video output, or a control parameter to control a component of the vehicle.

### Background

Despite the increasing integration of AI (artificial intelligence) technologies in consumer products throughout different technical fields, there is still a lack of standardization regarding the methods for personalization. Some of the problems associated with personalization relate to lack of a unified method for personalization, for example, how to personalize audio features to the user's preferences. The preferences of the users such as vehicle occupants are hard to interpret and, therefore, the tailoring of audio, video or other features to the users' preferences is not a straight-forward task.

### Summary

In view of the above, there is a need to provide a method and a system for a reliable personalization of an output from vehicle systems for a vehicle cabin, such as an audio or a video output, or control parameters to control vehicle components for driving assistance.

These needs are met by the features defined in the independent claims. The dependent claims define additional embodiments.

In an aspect, a computer implemented method is provided. The method is carried out by a processing entity of a vehicle cabin, wherein the processing entity comprises at least one computer processor. The method comprises the steps of receiving, by the processing entity, sensor data from at least one sensor of a vehicle; and applying, by the processing entity, the sensor data to a pre-trained machine learning algorithm for personalizing an output provided to the vehicle cabin.

In another aspect, a processing entity is provided. The processing entity comprises at least one computer processor configured to carry out the steps of a method. The method comprises the steps of receiving, by the processing entity, sensor data from at least one sensor of a vehicle; and applying, by the processing entity, the sensor data to a pre-trained machine learning algorithm for personalizing an output provided to the vehicle cabin.

In another aspect, a computer program product is provided. The computer program product comprises computer readable instructions, stored on an electronic storage medium, that, when executed by a processing entity, cause the processing entity to carry out the steps of a method. The processing entity comprises at least one computer processor configured to carry out the steps of the method. The method comprises the steps of receiving, by the processing entity, sensor data from at least one sensor of a vehicle; and applying, by the processing entity, the sensor data to a pre-trained machine learning algorithm for personalizing an output provided to the vehicle cabin.

In another aspect, a vehicle comprising a processing entity is provided. The processing entity comprises at least one computer processor configured to carry out the steps of a method. The method comprises the steps of receiving, by the processing entity, sensor data from at least one sensor of a vehicle; and applying, by the processing entity, the sensor data to a pre-trained machine learning algorithm for personalizing an output provided to the vehicle cabin.

### Brief description of the Drawings

The present disclosure will now be described more fully hereinafter with reference to the accompanying drawings, in which embodiments of the disclosure are shown. However, this disclosure should not be construed being limited to the embodiments set forth herein. Rather, these embodiments are provided so that this disclosure will be thorough and complete, and will fully convey the scope of the disclosure to those skilled in the art. Like numbers refer to like elements throughout.
FIG. 1 schematically shows an environment 100 of a vehicle according to one of a number of embodiments.
FIG. 2 schematically shows a reinforcement learning arrangement 200 according to one of a number of embodiments.
FIG. 3 shows a schematic architectural view of the entity 1000 which can carry out the steps of a method according to one of a number of embodiments.
FIG. 4 schematically shows a method 400 according to one of a number of embodiments.
FIG. 5 schematically shows operation modes 500 of a machine learning algorithm according to one of a number of embodiments.
FIG. 6a schematically shows an example 6100 of an inferencing of a machine learning algorithm according to one of a number of embodiments.
FIG. 6b schematically shows an example 6200 of a reinforcement learning of a machine learning algorithm according to one of a number of embodiments.
FIG. 6c schematically shows an example 6300 of a supervised learning of a machine learning algorithm according to one of a number of embodiments.
FIG. 7 schematically shows a graphical user interface, GUI, 700 for reinforcement learning according to one of a number of embodiments.

### Detailed description

The properties, features and advantages described above and the way in which they are achieved will become clearer and more clearly understood in association with the following description of the exemplary embodiments which are explained in greater detail in connection with the drawings. For simplicity and illustrative purposes, the present disclosure is described by referring mainly to an exemplary embodiment thereof. In the following description, numerous specific details are set forth in order to provide a thorough understanding of the present disclosure. However, it will be readily apparent to one of ordinary skill in the art that the present disclosure may be practiced without limitation to these specific details. In this description, well-known methods and structures have not been described in detail so as not to unnecessarily obscure the present disclosure.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical or electronic devices may be combined with each other and/or separated in any manner based on the particular type of electrical implementation that is desired. It is recognized that any circuit or other electrical or electronic device (e.g., an acoustic system, a telematic system, an advanced driver assistance system, ADAS) disclosed herein may include any number of microcontrollers, a central processor unit (CPU), integrated circuits, memory devices and software which co-act with one another to perform operation(s) disclosed herein. In addition, any one or more of the electrical or electronic devices may be configured to execute a program code (for an infotainment system) that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

The term "vehicle" in the context of the current disclosure may be understood as any vehicle having a vehicle cabin, such as a car, a track, an autonomous vehicle and alike.

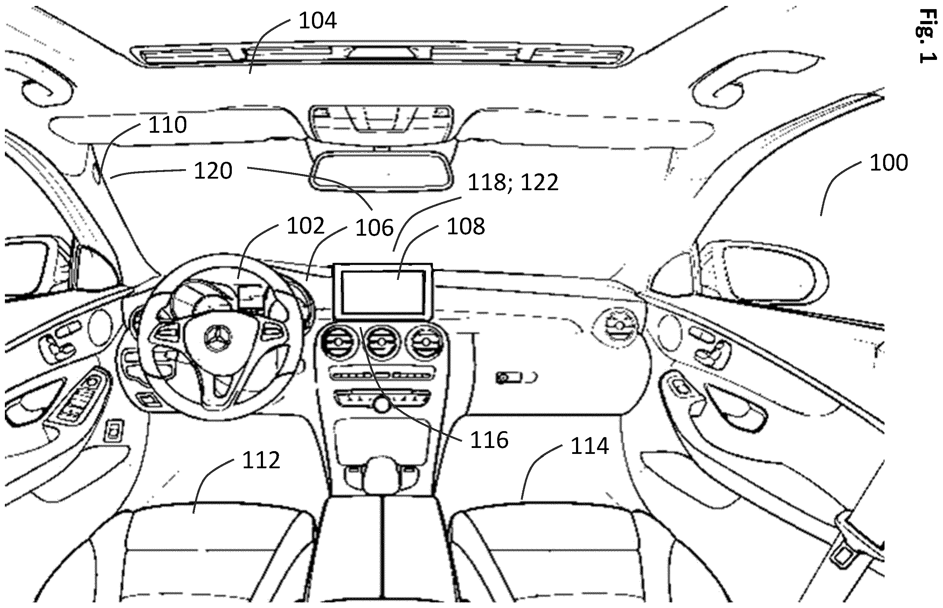

Personalization technologies are gaining significant traction within different technical fields. They aim to leverage user behaviour data to enhance user experience by tailoring it to its personal preferences. For example, in the automotive field these technologies generally aim to enhance the safety, comfort, and the overall in-cabin experience for both drivers and passengers. These technologies may employ sensors, cameras, and sophisticated algorithms to monitor and assess the status, actions, and well-being of occupants within a vehicle; and use this information to adjust different systems that affect the in-cabin experience. Some of the in-cabin experience may be provided by vehicle's systems described the context of Fig. 1.

The growing field of artificial intelligence (AI) is increasingly impacting the development of all kinds of technologies, boosting their capabilities through advanced automation functions enabled by machine learning (ML) algorithms. In the audio domain, AI-powered solutions are sometimes employed for applications such as music recommendation systems, conversational assistance systems, speech enhancement, and alike. ML algorithms, such as supervised learning and unsupervised learning algorithms, may be used in the development of such personalized experiences. These algorithms may involve analysing data from various sources, such as user behaviour patterns, contextual information which may be derived from sensor data, and make accurate predictions and recommendations. In such cases, ML algorithms may be employed to learn from the sensor data either by employing human supervision, e.g., in the form of data annotations or labels (supervised learning) or the ML algorithms may be allowed to discover patterns in the sensor data without any explicit guidance or instruction (unsupervised learning).

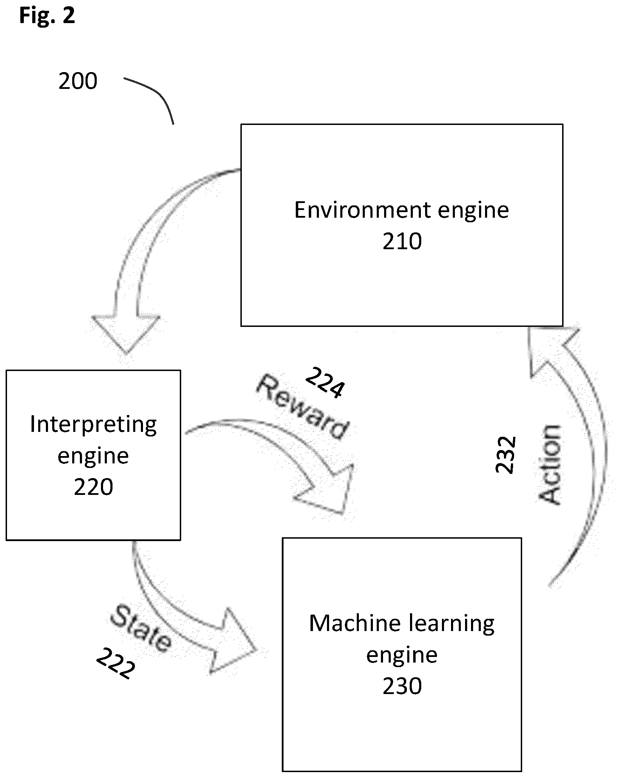

In some other examples, a machine learning algorithm may involve reinforcement learning (RL). An example of a RL algorithm is described in the context of Fig. 2.

FIG. 1 schematically shows an environment 100 of a vehicle according to one of a number of embodiments.

In some examples, the environment 100 may be an interior environment of a vehicle's cabin that may be characterised by sensor information obtained from, for example, a camera 104 or a microphone 106 placed in the vehicle's cabin.

In some examples, the environment 100 may be characterised by vehicle's parameters such as speed, timing, breaking, acceleration information, traction, control information about lights, parameters from a dashboard 102, and alike.

In some examples, the camera 104, which may be referred to as a vehicle sensor, may provide such sensor data as images of occupants of the vehicle, for example, a driver in the driver's seat 112 or a passenger in a passenger's seat 114.

A processing entity 116 may process such sensor data and provide a personalized output to the vehicle's cabin. This output may be reproduced by one or more vehicle's systems such as a telematic system 118, an acoustic system 120 or used by an advanced driver assistance system, ADAS, 122. Telematic system 118 may comprise a processing entity 116 or a processing entity 1000, and a display 108 to display the output, such as video or images. Acoustic system 120 may comprise a processing entity 116 or a processing entity 1000, and one or more loudspeakers 110 to reproduce audio output in the vehicle's cabin. ADAS 122 may comprise a processing entity 116 or a processing entity 1000 which may generate one or more control parameters to control one or more components of the vehicle. In some examples, ADAS 122 may provide audio output which may be reproduced by the acoustic system 120 (e.g., speech from a personal assistant for assistance with driving, e.g., navigation system). In some examples, ADAS 122 may provide a video output which may be displayed by the telematic system 118. Processing entity 116 or processing entity 1000 of all systems, i.e., telematic system 118, acoustic system 120 and/or ADAS 122 may be communicatively coupled. Thus, telematic system 118, acoustic system 120 and/or ADAS 122 may be integrated in vehicle's cabin and their outputs controlled and synchronized by one of the processing entities 116, 1000.

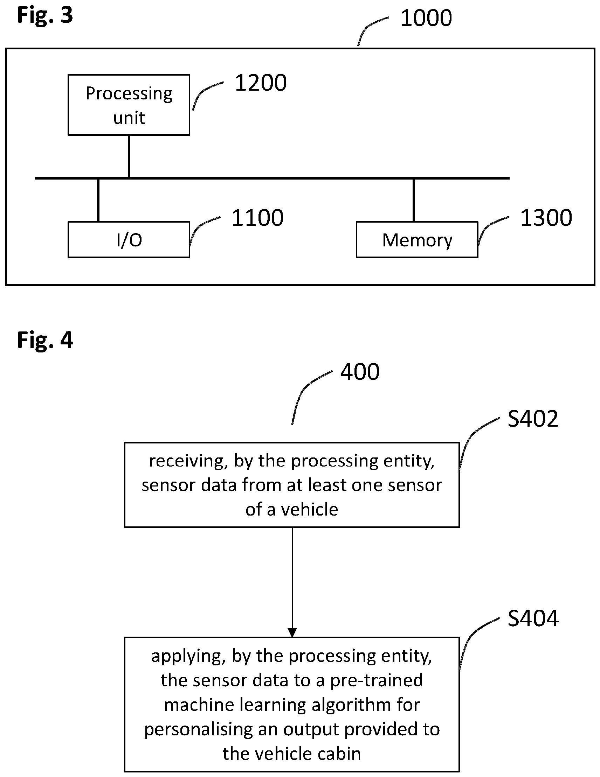

Characterization of the environment 100 may be carried out by an environment engine 210 further described in the context of Fig. 2. Environment engine 210 may comprise a processing entity 116 or a processing entity 1000 described in the context of Fig. 3. The processing entities 116 and 1000 may be identical. If several processing entities 116 and/or 1000 are used in vehicle's cabin, all of them may be communicatively coupled and their outputs synchronized. Communicatively coupled processing entities 116, 1000 may be referred to as a distributed processing entity 116, 1000. Each entity 116, 1000 may be configured to carry out the steps of the method of this disclosure or a part of it.

Acomputer implemented method carried out by the processing entity 116; 1000 of a vehicle cabin is provided. The processing entity 116; 1000 comprises at least one computer processor. The method comprises steps S402 and S404. At step S402, method 400 receives, by the processing entity 116; 1000, sensor data from at least one sensor of a vehicle. At step S404 the method 400 applies, by the processing entity 116; 1000, the sensor data to a pre-trained machine learning algorithm 620 for personalizing an output (action 610, 232) provided to the vehicle cabin.

In some examples, the computer implemented method may be used for an acoustic system 120 of the vehicle, wherein the output is an audio output, and wherein personalising comprises predicting by the pre-trained machine learning algorithm at least one characteristic of the audio output based on the sensor data.

In some examples, the computer implemented method may be used for a telematic system 118 of the vehicle, wherein the output is a video output, and wherein personalising comprises predicting by the pre-trained machine learning algorithm at least one characteristic of the video output based on the sensor data.

In some examples, the computer implemented method may be used for a driver assistance system, ADAS, 122 wherein the output comprises at least one control parameter to control a component of the vehicle; and wherein personalising comprises predicting, based on the sensor data, by the pre-trained machine learning algorithm the at least one control parameter.

In some examples, personalizing the audio output may comprise generating a music recommendation (for, e.g., the acoustic system 120).

In some examples, the computer implemented method of this disclosure may receiving sensor data from the at least one sensor, which can be any one of: at least one microphone106 detecting acoustic signals from the vehicle cabin; at least one display 108 receiving input from an occupant of the vehicle; at least one camera 104 imaging an interior of the vehicle cabin; at least one sensor communicatively coupled to ADAS 122 for measuring vehicle's parameters and/or driver's response during driving; and/or at least one pressure sensors detecting occupants' presence at passenger seat 114 or driver seat 112.

In some examples, personalizing the video output may comprise generating a video recommendation (e.g. for the telematic system 118).

FIG. 2 schematically shows a reinforcement learning arrangement 200 according to one of a number of embodiments.

In general, reinforcement learning arrangement 200 may comprise such fundamental components as an interpreter, an agent, and an environment. Each component may be implemented through an engine.

In some examples, the arrangement 200 may comprise an environment engine 210, interpreting engine 220 and machine learning engine 230. The machine learning engine 230 can operate a machine learning algorithm according to one of a number of embodiments.

Reinforcement learning in general may involve training a computer-based agent, or in other words, a machine learning algorithm, to take actions in a dynamic environment, to maximize the cumulative reward given by an interpreter. In some examples, the interpreter may be a human interpreter or a rule-based computer algorithm. The rule-based computer algorithm may be a different algorithm to the machine learning, ML, algorithm. The rule-based computer algorithm acting as an interpreter may provide feedback to the ML algorithm. The "interpreter" may be located inside the environment 100 and may oversee the agent (ML algorithm). The "interpreter" may provide state information about the environment 100, as well as feedback as a reward (e.g., positive, or negative) for the actions or the output generated by the ML algorithm. In this way, the agent (ML algorithm) may learn dynamically and in an iterative process how to actively act over the environment, to maximize the reward given by the interpreter. Such a learning process may be advantageous for training ML algorithms to be tailored to the preferences of individuals, as it would allow them to adapt in real-time given feedback or reward.

A machine learning algorithm can comprise a neuronal network such as deep neuronal network, a convolutional neuronal network, a recurrent neuronal network or an attention based neuronal network known in the art. Such a neuronal network can embed input data from sensors of the vehicle and classify this data into classes by extracting features, e.g., facial expression features. The ML algorithm, although it may perform classification, it is not limited to it. It could also perform regression or generation of new data, for example. These features can comprise eye movements, mouth movements. These features can be classified into emotions or states of vehicle occupants. E.g., slow eye movements can be classified as tired occupant, fast eye movements can be classified as active occupant, lifted corners of the mouth can be classified as a happy occupant, etc. Occupant state can be correlated to a music or video track, e.g., happy occupant fast music or video, and vice versa. Driver state or preference can be correlated to vehicle control parameters, e.g., changing lights or traction, e.g., more active driver prefers more traction.

Relationship between (a) training data, (b) input data and (c) output of the machine learning algorithm may be described by following examples (a), (b), (c).
(a) Training data can comprise facial features, including eyes and head movements of a human occupant. The training data used for pre-training can be simulated data or can be data of a human that is not the intended user of the vehicle. Training data used for subsequent training (personalization of the machine learning algorithm) can comprise facial features of the intended user of the vehicle (e.g., one or more intended drivers and/or passengers). Training data can also comprise information non-related directly to the human occupant(s), e.g. telemetry data from inside of the vehicle (e.g., a car), information about personal devices that a human occupant agrees on use for the purpose of the application and ultimately for the features extracted from any output of, e.g., the infotainment system.
(b) Input data in inferencing, or in other words, deployment of the model can be the similar to the training data, i.e., facial features, including eyes and head movements of the actual driver and/or passengers of the vehicle. Input data, similar as the training data (a), can comprise any data obtained from the infotainment or other systems, including external systems outside of the vehicle cabin.
(c) An output from the machine learning algorithm (or in other words, an action) can be music recommendation, automatic music generation, conversational assistance, and/or speech enhancement for an acoustic system of the vehicle or video recommendation for a telematic system of the vehicle. The input/training data may allow to produce a personalized output. E.g., a driver may be tired. In this case, eye movements are generally slower than usual. Tiredness can be improved by recommending a faster music or increasing the volume of the music. In this case also speech can be enhanced by talking to the driver louder. Conversational assistance can involve asking the driver whether he or she is tired and would like to listen to some music. In another example, the input/training data may allow to produce another personalized output. E.g., movements of mouth in input or training data can be correlated to speech and accent. Such correlation or classification can enhance speech and accent recognition by a trained ML algorithm, and in turn allow for adjusting audio output (speech generated by a head unit of the vehicle/ADAS system) to the accent of the driver.

A machine learning algorithm can be trained to predict one or more characteristics of the video or audio output or predict control parameters of the vehicle from input sensor data. For example, a machine learning algorithm can extract and classify features from sensor data, e.g., instruments in an audio track, genre of an audio track, emotions of vehicle occupants from camera data, response of a driver. A pre-trained machine learning algorithm can match classified data, e.g., a genre or an instrument to an emotion or response (e.g., funk genre to a happy face, lyrics to a sad face; slow music to slow driver response, fast music to a fast response). To pre-train the machine learning algorithm to match data, for example, a rule-based algorithm can be used (computer-based interpreter) or feedback from a human interpreter. The pre-trained learning algorithm can be re-trained or personalised (e.g., through supervised or reinforcement learning). During the training, pre-trained machine learning algorithm can personalise matching of data. The re-trained machine learning algorithm can generate personalised output (e.g., lyrics to a happy face, funk to a sad face; fast music to a slow response, slow music to a fast response). Thus, personalised output from re-trained ML algorithm can be the same, different or even opposite to an output from a pre-trained ML algorithm. If a non-trained machine learning algorithm is used in inferencing mode, it can produce an output that does not have a relationship to the input data. This relationship can be learned during pre-training, and further updated or personalised during re-training. Re-training may also be referred to as "training".

However, the machine learning algorithm does not have to comprise a neuronal network. The ML algorithm can comprise a decision tree or a shallow classifier.

In some examples, the "Action 232" illustrated by FIG. 2 may refer to a music recommendation, providing conversational assistance systems, and/or speech enhancement.

In some examples, the "Reward 224" may refer to a binary reward, good or bad scored by 1 and 0, respectively, or by a more complex reward scheme. For example, this can be a vector-based reward comprising a plurality of values. The values can comprise emotion identifiers. The values can further comprise emotion-recommendation pairs, e.g., happy emotion-fast music; sad emotion-slow music; tired driver-fast music.

In some examples, the "State" 222 may refer to a physical or emotional state of a driver or passenger. E.g., a tired driver can be identified by eye movements which are slower than usual.

In some examples, the "Interpreting engine 220" can receive inputs from an occupant of the vehicle or a rule-based computer program. The interpreting engine can interpret, e.g., whether the driver is tired by eye movements being slower than usual.

In some examples, the "Machine learning algorithm 230" (which may also be referred to as a computer-based "Agent") can extract features from sensor data, e.g., the driver is tired when eye movements are slower than usual; the driver is not tired when eye movements are faster. The machine learning algorithm can also learn contextual information from the environment and correlate this information to music or video, e.g., distinguishing different voices or accents in the cabin and adjusting speech response to different accents or voices.

In some examples, the "Environment 100" may relate to the interior of the vehicle cabin. For example, detecting or interpreting the state of the environment may include imaging the occupants by camera, detecting sounds inside the cabin, etc. The "Environment" may be characterized by the environment engine 210 receiving information from vehicle sensors, even the ones generated outside of the cabin, for example, driver response, speed of the vehicle and/or alike.

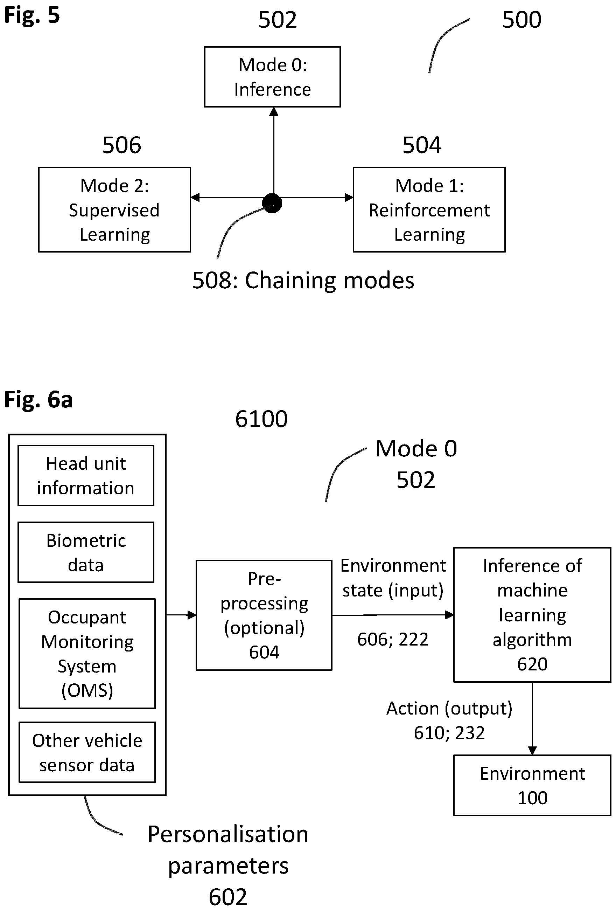

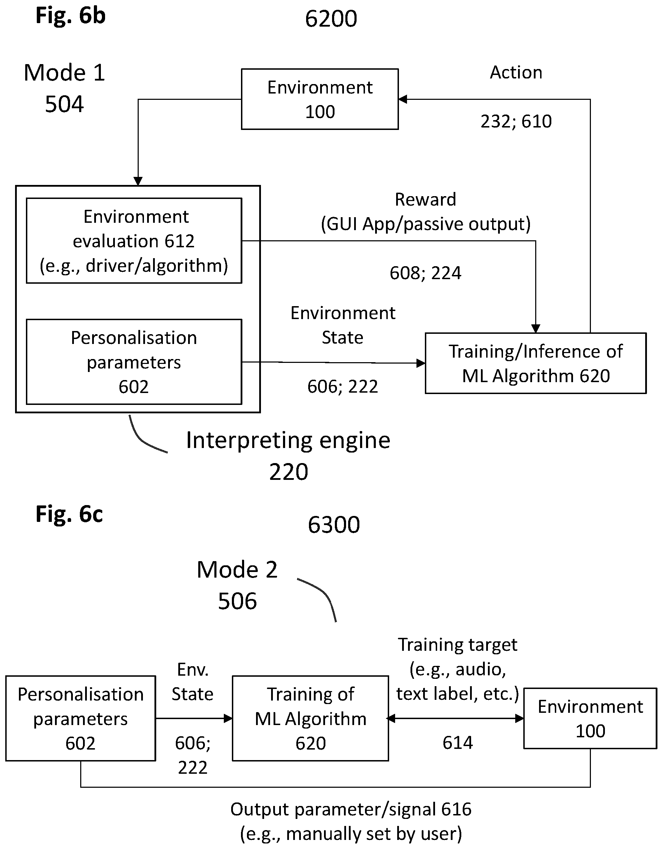

In some examples, environment engine 210 may receive sensor data and may process this data to generate personalization parameters 602 further described in the context of FIG. 6. For example, sensor data may be images from a camera that may be processed into personalization parameters 602 comprising a state of a driver (tired, active). The state of the driver may be a part of the overall environment state 222. Sensor data may comprise head unit information, for example, which music track is played inside the vehicle cabin. The music track, or in more general terms, head unit information may provide another personalization parameter characterizing the environment state 222.

As may be inferred from FIGs. 1 and 2, the sensor data, obtained by at least one sensor of the vehicle, may comprise information about an environment 100 of the vehicle, status and/or actions of an occupant of the vehicle. The status or actions may be referred to as some of the characteristics of the overall environment 100 of the vehicle. In other words, the information about environment 100 may be referred to as a "state" 222 of the environment 100.

FIG. 3 shows a schematic architectural view of the entity 1000 which can carry out the steps of a method according to one of a number of embodiments.

The entity 1000 may be incorporated into any module or engine (e.g., environment engine 210, interpreting engine 220, machine learning engine 230; acoustic system 120, telematic system 118, ADAS 122). The entity 1000 may comprise an interface 1100 which is provided for transmitting data to or control analysis of data by other entities via a transmitter and for receiving data from other entities using a receiver. The interface may be referred to as input/output interface (I/O). The interface 1100 is especially qualified to receive sensor signal and/or user input. The interface 1100 is further qualified to transmit data to another entity. The entity 1000 furthermore comprises a processing unit 1200 which is responsible for the operation of the entity 1000. The processing unit 1200 comprises at least one computer processor and can carry out instructions stored on a memory 1300, wherein the memory may include a read-only memory, a random-access memory, a mass storage, a hard disk or the like. The memory can furthermore include suitable program code (computer readable instructions) to be executed by the processing unit 1200 so as to implement the above-described functionalities in which the entity is involved. The entity 1000 can be implemented in a single node or may be distributed over several nodes or entities in a cloud implementation. Each node or entity may comprise a computer processor, a computer memory, a computer interface or may be implemented on a cloud platform.

For examples, a processing unit 1200 may receive sensor data. Another processing unit 1200 may receive user input. Another processing unit 1200 may be a part of the acoustic system, and so on. All processing units 1200 may be communicatively coupled. Each processing unit 1200 may receive and/or transmit data to/from a cloud or another entity. For example, a processing unit 1200 may be a part of a car telematic system that can be communicatively coupled to a processing unit 1200 of a mobile phone. The computer program product may be stored in the memory 1300, which may be an electronic storage medium or a cloud.

From the above it may be understood that the entity 1000 may receive data via the interface 1100. The received data may be user input, camera data, microphone data, occupant's presence, biometric data, user input, feedback, dashboard information, head unit information, and alike.

The entity 1000 implemented in a vehicle cabin is illustrated in FIG. 1 as a processing entity 116. The processing entity 116 may be one processing entity operating, for example, acoustic system 120 and/or telematic system 118. The entity 116 may be a distributed entity comprising a plurality of computer processors, wherein each or several processors may operate one or more systems. The entity may be communicatively coupled with vehicle instruments, control components, navigation and/or driver assistance systems to receive other data (e.g., speed, timing, breaking, acceleration, radar data, GPS data, etc.) and use this data analogous to sensor data (sensor signals) to personalize the acoustic output. The entity may be communicatively coupled to one or more personal assistant devices (e.g., mobile phones, tablets) and receive user data (e.g., playlists, user selection criteria for the acoustic output) and use this data analogous to sensor data (sensor signals) to personalize the acoustic output.

FIG. 4 schematically shows a method 400 according to one of a number of embodiments.

The method comprises steps S402 and S404. At S402, the method receives, by the processing entity, sensor data from at least one sensor of a vehicle. At S404, the method applies, by the processing entity, the sensor data to a pre-trained machine learning algorithm for personalising an output provided to the vehicle cabin. The method may be carried out by a processing entity described in the context of Fig. 1 as well as Fig. 3 (processing entities 116 and 1000, respectively).

FIG. 5 schematically shows operation modes 500 of a machine learning algorithm according to one of a number of embodiments.

The operation modes 500 comprise Mode-0: Inferencing Mode 502; Mode-1: Reinforcement Learning Mode 504; and Mode-2: Supervised Learning Mode 506. Chaining modes 508 does not have to correspond to the numbering of modes, e.g., 0-1-2, but may have a different order, for example, an order: Mode-2 - Mode-1 - Mode-0. Chaining means that modes may be used in a sequence.

Hence, the enumeration of each mode (Mode-0, Mode-1, Mode-2) is merely illustrative and does not imply a sequential order of operation of the personalization framework, namely, the sequence of using modes does not have to be always 0-1-2. One of the advantages of the proposed method may be that any of the modes could be a starting point of the method, and that any one of them can follow or be followed by any other.

Although the method of this disclosure may be applied to an automotive field, where the vehicle cabin may be referred to as the listening environment, the method can be equivalently applied to any other field with an equivalent listening environment, e.g., headphones, home audio, movie theatres, and alike.

FIG. 6a schematically shows an example 6100 of an inferencing of a machine learning algorithm according to one of a number of embodiments.

In the inferencing example 6100, a machine learning algorithm 620 may process a set of datapoints which may be referred to as input data about environment state 606. The ML algorithm 620 can then produce an output or action 610 related to the input. This output, for example, can in turn modify the state of the environment such as listening environment in the vehicle cabin (e.g., change or choose an audio track based on facial expression of the driver serving as input data).

Thus, as may be understood from the above, an input to the ML algorithm 620 may be referred to as the "environment state" 222, 606 which may be described by a set of "personalization parameters" 602. The personalization parameters 602 can be composed from data extracted from a wide range of available sensors and cabin analysis/monitoring systems that may be included in the vehicle (e.g., vehicle telematics from the head unit, driver performance metrics from analytics systems, and alike.). For example, the personalization parameters 602 may be obtained from an Occupant Monitoring System (OMS), which may utilize wide-field-of-view image sensors (cameras) to analyze all occupants in the cabin, going beyond just the driver. OMS may offer real-time insights into the conditions and activities of both drivers and passengers. In addition to OMS, there may be other in-vehicle monitoring systems that could be leveraged, such as Driver Behavior and Fatigue Monitoring, and Distraction Detection. These systems generally rely on advanced features and vehicle sensors such as infrared cameras, which can provide effective monitoring in low-light conditions, and thus, provide crucial night vision capabilities. Such systems can accurately detect and recognize facial features, including eyes and head movements, even in challenging lighting conditions, ensuring precise driver and passenger state analysis.

The process of deriving the environment state 222, 606 from the personalization parameters 602 can include a pre-processing 604. The pre-processing may involve aggregating, transforming or processing personalization parameters 602 to provide a suitable input to the ML algorithm. For example, images from cameras may be aggregated. Additionally, data from the head unit providing information about music tracks can be aggregated with images. A computation can also take place within (as a part of) the pre-processing step. E.g., computing the spectrogram of the audio signal, applying some signal filters, segmentation of images, and/or alike. "Feature extraction" may refer to a general term for any computation taking place in the pre-processing step that transforms the input signal to a suitable representation for the ML algorithm. However, other types of computation can take place in the pre-processing that do not have to involve a representation transformation, such as, for example, common computations in the audio domain, as stereo to mono down-sampling. Thus, personalization parameters 602 may comprise aggregated sensor data from the head unit about music tracks as well as from the cameras about the state of the driver. The state of the driver and music track may provide aggregated information about environment state 222.

In some examples, the ML algorithm 620 can process the data directly received from one of the monitor systems, as well as the raw sensor information, without pre-processing 604.

The ML algorithm 620, depending on the environment state 222, 606 provided as information at the input, can produce an output. The output may also be referred to as an "action" 610, 232. The output may be directed to modifying the state 222 of the (listening) environment. This action 610, 232 can be any output a ML algorithm can produce which is associated with the input. For example, if the input concerns driver's state, the output may be audio or video. The output may be dependent on the task the ML is appointed to do. For example, if the ML algorithm is a generative neuronal network, the action 610, 232 can be the generation of audio to be played in the cabin, or if the ML algorithm is a classification algorithm, the action 610, 232 can be in the form of textual categorical information that can be used by another in-cabin system to modify the environment 100.

In some examples, the ML algorithm in Mode-0 (Inference only) may be referred to as sufficiently trained when it produces a satisfactory output which correlates with the input/sensor data. In other words, the ML algorithm may be sufficiently trained when it generates an output which has an error below a threshold. The error can be estimated, for example, by comparing the ground truth data (e.g., expected output provided by a signal or parameter 616 manually set by a user) to the actual output or action 610 of the ML algorithm 620.

As may be inferred from FIG. 6a and the preceding figures, some examples of the computer implemented method 400 can involve determining, from the sensor data, at least one personalization parameter 602 comprising at least one of: head unit information including information from an audio system of the vehicle; biometric information of at least one vehicle occupant; occupant monitoring information including occupant presence, facial features of the at least one occupant and/or driver's status; and dashboard information. The method may further comprise providing the at least one personalization parameter as an input to the machine learning algorithm 620 for personalizing the output (action 610; 232).

In some examples, in addition to Mode-0: 502 or instead of it, the computer implemented method may involve reinforcement learning, which is further described in the context of FIG. 6b (Mode-1: 504); and/or supervised learning, which is further described in the context of FIG. 6c (Mode-2: 506). Optionally, the supervised learning may comprise labelling sensor data.

FIG. 6b schematically shows an example 6200 of a reinforcement learning of a machine learning algorithm according to one of a number of embodiments.

In this example 6200 the method may be operating in Mode-1, reinforcement learning. The ML algorithm 620 in this example is in a state of simultaneous training and inference, since it produces an output or action 610 that acts over the listening environment 100 having environment state 606, and at the same time the ML algorithm 620 is learning how to optimize the output or action 610.

In mode 504, an interpreter may be involved that may provide input via an interpreting engine 220. The interpreter may oversee the ML algorithm 620 during training. The interpreting engine may receive personalization parameters 602 from vehicle sensors; and an environment evaluation 612 from an interpreter, e.g., a driver or a rule-based computer algorithm. The driver may be a human. Alternatively, or additionally, another user such as a passenger of the vehicle can also provide the environment evaluation 612 to the interpreting engine 220. Both elements, the environment evaluation 612 and personalization parameters 602, may allow to assess the status in which the environment is and provide information about it to the ML algorithm 620.

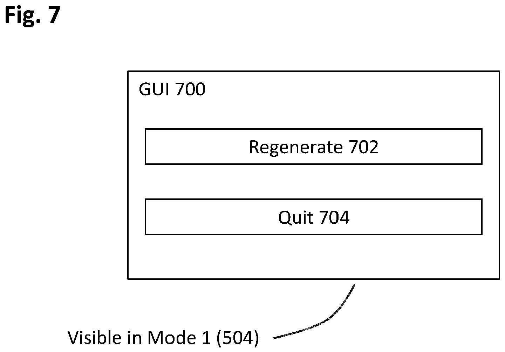

In the same way as in mode 502, the personalization parameters 602 for mode 504 can provide state information about the environment 100 to the ML algorithm 620; while the environment evaluation entity (e.g.., the driver or the algorithm) can provide a reward 608 based on the actions 610, 232 the ML algorithm 620 produces and how the actions 610, 232 affect the listening environment 100. In this way, the ML algorithm 620 can learn dynamically and in an iterative process how to optimize its output or action 610, 232 to maximize the reward 608 given by the environment evaluation entity. Therefore, the ML algorithm 620 can learn how to modify the listening environment 100 according to the preferences of the user (driver, passengers) and based on the sensor data characterizing environment state 222, 606 before modification. The reward 608 may be provided through an application having a graphical user interface (a GUI App) or it may also be a passive output, e.g., an output from a rule-based algorithm provided directly, without a GUI App, to the ML algorithm. An example of a GUI App is described further in the context of FIG. 7.

The GUI App in Fig. 7 specifically relates to an example application where the ML algorithm is used for music generation. I.e., for other applications (other GUI Apps) the GUI may look totally different. The main goal is to provide a computer interface for direct feedback (the reward) from the user to the algorithm regarding the current state of the listening environment.

Returning to FIG. 6b, where the computer implemented method involves reinforcement learning, this learning may comprise receiving, by the processing entity 116; 1000, feedback 224; 608 from an interpreting engine 220 and providing, by the processing entity 116; 1000, the feedback 224; 608 to the machine learning algorithm 620.

The reinforcement learning may further comprise receiving, by the interpreting engine 220 via a computer interface 1100; 700, the feedback 224; 608 from an occupant of the vehicle, wherein the occupant can be a driver and/or a passenger of the vehicle. Additionally, or alternatively, the feedback 224; 608 may be generated by the interpreting engine 220, in which case the feedback 224; 608 may be based on a rule-based computer algorithm (e.g., if extracted feature from an image obtained by camera 104 of the face of the driver is classified as a "sad face", play "fast music"). The rule-based algorithm may comprise a library of rules matching features extracted from the sensor data (e.g. the image from camera 104) to an output from the ML algorithm 620 (e.g., a list of songs with their classification e.g., "fast", "slow", etc.), hence producing data pairs, e.g., sensor feature and output parameter pair (e.g., sad face - fast song). "Sensor feature" may also be referred to as a personalization parameter from a plurality of personalization parameters 602.

FIG. 6c schematically shows an example 6300 of a supervised learning of a machine learning algorithm according to one of a number of embodiments.

Example 6300 of the supervised learning related to Mode 506 involves training the ML algorithm 620, for personalization in a direct supervised manner. The mode 506 would be active in the case when the ML algorithm 620 is in a learning state, but either no environment evaluation entity or interpreter is available (e.g., user does not want to give active feedback) or by part of the ML algorithm is desired (only manually by the user).

Stated simply, in Mode-2, the ML algorithm can continuously learn personalization features, but instead of doing this in a reinforcement learning setting (as in Mode-1), it can learn the features in a supervised learning form. This means, first, that ML algorithm is not generating any action to change the listening environment during the learning, and second that ML algorithm uses the direct output of other cabin systems (e.g., head unit information), which are set manually by the user and currently present/affecting the listening environment, as the ground truth for learning the user preferences. In this way, for example, ML algorithm configured for music generation would take as ground truth the music that the user is playing currently in the cabin, in order to learn that at a certain environment state (e.g., high speed, focused face, driving in the highway), the user likes to hear certain type of music (e.g., fast paced, rock).

The ML algorithm 620 in the operation mode 506 may be solely in a training state causing no effect on the environment 100 (e.g., the output of the ML algorithm in this operation mode would not be applied to modify the environment). ML algorithm 620 may receive, as in other modes 502, 504, an environment state 606, 222 derived from the personalization parameters 602 as its training input or training target 614. In addition, ML algorithm 620 may receive the signal or parameter 616 it is supposed to produce in inference (expected output). This signal or parameter 616 may be manually set by a user (trainer). For example, the user/trainer may set this training signal or parameter 616 which may correspond to the state of the environment in the cabin, e.g., an audio track that is naturally present in the listening environment at the time of the training. In other words, the training signal or parameter 616 may correspond to the actual environment state 222, 606. This signal or parameter 616 may serve as the training target of the ML algorithm 620 in a supervised learning Mode-2 (506).

The actual environment state does not have to be set by a user or trainer manually but may be automatically obtained from e.g., head unit of the vehicle, e.g., a soundtrack or video reproduced in the vehicle cabin, traction parameters or parameters of headlights for ADAS, and/or alike.

In mode 506, the ML algorithm 620 can learn to produce a personalized output or action 610, 232 for the inferencing mode 502 by analysing the user's behaviour through the environment state 606, 222 which may be obtained from the sensor data or personalisation parameters 602 and provided to the ML algorithm as training input. As a result of the training the ML algorithm can learn how to provide meaningful output or action 610, 232 correlated to the sensor data received in inferencing mode 502. For example, in case when ML algorithm 620 is used to generate an audio output or action 610, 232 such as music, the ML algorithm 620 can learn from the personalization parameters 602 characterizing the environment state 606, 222. The personalization parameters 602 can be provided as a training input to the ML algorithm 620, e.g., the personalization parameters may be an identifier of the music track the user manually selects. The music track may correspond to a music track naturally reproduced in the listening environment. For example, a driver or passenger of the vehicle may select a music track and sent this track as a training target 614 for personalising the output or action 610, 232 from the ML algorithm 620. This training target 614 can also be text label associated with the music or video the user may select.

FIG. 7 schematically shows a graphical user interface, GUI, 700 for reinforcement learning according to one of a number of embodiments.

In some examples when the environment evaluation entity or interpreter is a human (in contrast to a rule-based algorithm), the reward 608 or feedback may be provided to the ML algorithm 620 via a computer interface 1100 implemented as a graphical user interface, GUI, 700. Through this GUI 700 a human user or interpreter can provide feedback (reward or preferences) regarding the (listening) environment state 222. The user or interpreter can regenerate the current track being played in the vehicle's cabin by simply pressing a button "generate" 702, giving feedback to the ML algorithm 620 that the currently generated song was not user's preference for their current state. In this case, the reward may be 0 (negative). If the song was the user's preference, the reward may be 1 (positive). Reinforcement learning mode may be stopped by pressing a button "quit" 704 on the GUI 700. Stopping the reinforcement learning mode 504 can call or trigger another mode, e.g., inferencing mode 502. Stopping the reinforcement learning mode 504 can also cause the GUI 700 to disappear from a display or be replaced by another GUI, e.g., a home screen on the display. The GUI 700 can be called again from, e.g., a button on the home screen. Thus, different operation modes 502, 504, 506 can be selected via a computer interface, e.g., one or more GUIs.

In alternative examples, the environment evaluation entity or interpreter can be a computer algorithm (e.g., rule based) that can evaluate the state 222, 606 of the (listening) environment 100 and/or the user(s) and provide automatically continuous feedback to the ML algorithm 620, e.g., in the form of a passive output. "Passive" means that this output or feedback is not actively influenced by the user or interpreter, in which case the GUI is not needed. The passive feedback may be provided via a computer interface 1100 which does not need to be graphic but enable direct data transfer between the ML algorithm and the interpreting engine 230. The computer algorithm (interpreter) operated by the interpreting engine 230 can analyse the (listening) environment status 606, 222 in an objective manner and provide the corresponding reward 608 or feedback to the ML engine 230 operating the ML algorithm 620 accordingly.

As may be inferred from the above, the environment 100 may be referred to as a "listening" environment. However, the term "environment" 100 should not be understood as limiting to the listening environment, but "environment" in general concerns the vehicle, including the exterior of the vehicle. For example, speed or traction may also be some of the characteristics of the "environment" 100.

As may be inferred from the above, any operation mode 502, 504, 506 may be selected as the starting point for personalizing the output or action 610, 232 from the ML algorithm 620. Any mode 502, 504, 506 can be executed individually. The goal of the method of this disclosure is to train the ML algorithm 620 to be tailored to the preferences of users or vehicle occupants. Once the training is accomplished and no further learning is required by the ML algorithm 620, the method of the current disclosure can operate in the final, inferencing Mode-0 (502), where the ML algorithm 620 can infer the necessary action 610, 232 to influence the (listening) environment 100 according to the user's preferences for a particular state 222, 606.

Regardless of the state 222, 606 selected as a starting point or training target 614, the ML algorithm 620 employed could be pre-trained (e.g., in a supervised or in any other way including reinforcement learning) before deployment in the inferencing mode 502. This may provide a starting point for the ML algorithm 620 to infer actions 610, 232 with a degree of confidence. The degree of confidence may correlate with a "logical" output, or in other words, an output correlated to the input such as the sensor data or personalization parameters 602 derived from the sensor data. "Logical" output can be assessed by an error evaluated by comparing ground truth data (signal or parameter 616) to the actual output or action 610 of the ML algorithm 620.

The ML can be pre-trained before deployment in any modes 502, 504, 506, considering that the starting point of the method 400 could be any of the modes 502, 504, 506.

Pre-trained ML algorithm 620 may be referred to as an algorithm which is not yet personalized to the preferences of the user or vehicle occupant but is pre-trained on general sensor data which may also be simulated data (e.g., simulated facial expressions of a dummy face). Pre-trained ML algorithm 620 may be particularly advantageous when inferencing Mode-0 (502) is selected as starting point for the personalization process. In this case, no training may take place on the actual sensor data (the actual driver face, which may slightly differ from the dummy face). The output would be generated according to the pre-training data which would be "personalized" to the dummy face and pre-selected audio tracks, which may not fully alight to the user's face and user selection of audio tracks. Thus, the training or re-training may follow after pre-training to fully alight the ML algorithm to the user's face and selection of audio tracks (e.g., happy face, fast tracks). Otherwise, without pre-training, a completely untrained ML algorithm 620 deployed directly in inferencing mode 502 may produce an illogical output characterized by an error going beyond a threshold and resulting in a random output, not correlating with the input (e.g., happy face, drama song; happy emotion is erroneously classified as sad emotion, and alike).

Summarising, a computer implemented method carried out by a processing entity of a vehicle cabin is provided. The processing entity comprises at least one computer processor. The method comprises the steps of receiving, by the processing entity, sensor data from at least one sensor of a vehicle; and applying, by the processing entity, the sensor data to a pre-trained machine learning algorithm for personalizing an output provided to the vehicle cabin.

In view of the above, general conclusions can be drawn that may be summarised by the following examples.

In some examples, the computer implemented method may be used for an acoustic system of the vehicle, wherein the output is an audio output, and wherein personalising comprises predicting by the pre-trained machine learning algorithm at least one characteristic of the audio output based on the sensor data.

In some examples, the computer implemented method may be used for a telematic system of the vehicle, wherein the output is a video output, and wherein personalising comprises predicting by the pre-trained machine learning algorithm at least one characteristic of the video output based on the sensor data.

In some examples, the computer implemented method may be used for a driver assistance system, ADAS, wherein the output comprises at least one control parameter to control a component of the vehicle; and wherein personalising comprises predicting, based on the sensor data, by the pre-trained machine learning algorithm the at least one control parameter.

In some examples, personalizing the audio output may comprise generating a music recommendation (for, e.g., the acoustic system).

In some examples, personalizing the video output may comprise generating a video recommendation (e.g. for the telematic system).

In some examples, the sensor data may comprise information about an environment of the vehicle, status and/or actions of an occupant of the vehicle.

In some examples, the computer implemented method may further comprise: determining, from the sensor data, at least one personalisation parameter comprising at least one of: head unit information including information from an audio system of the vehicle; biometric information of at least one vehicle occupant; occupant monitoring information including occupant presence, facial features of the at least one occupant and/or driver's status; and dashboard information; and providing the at least one personalisation parameters as an input to the machine learning algorithm for personalizing the output.

In some examples, the at least one sensor may be any one of: at least one microphone detecting acoustic signals from the vehicle cabin; at least one display receiving input from an occupant of the vehicle; at least one camera imaging an interior of the vehicle cabin; at least one sensor measuring vehicle's parameters and/or driver's response during driving; and/or at least one pressure sensors detecting occupants' presence.

In some examples, the computer implemented method may further comprise reinforcement learning and/or supervised learning, wherein, optionally, the supervised learning comprises labelling sensor data.

In some examples, the reinforcement learning may comprise receiving, by the processing entity, feedback from an interpreting engine and providing, by the processing entity, the feedback to the machine learning algorithm.

In some examples, the computer implemented method may further comprise receiving, by the interpreting engine via a computer interface, the feedback from an occupant of the vehicle, wherein the occupant is a driver and/or a passenger of the vehicle, or generating, by the interpreting engine, the feedback based on a rule-based computer algorithm.

In some examples, a processing entity is provided. The processing entity comprises at least one computer processor which may be configured to carry out the method steps of anyone of the preceding examples.

In some examples, a computer program product is provided. The computer program product comprises computer readable instructions, stored on an electronic storage medium, that, when executed by the processing entity, may cause the processing entity to carry out the method steps according to any one of the preceding examples.

In some examples, a vehicle comprising a processing entity is provided. The processing entity comprises at least one computer processor which may be configured to carry out the method steps of anyone of the preceding examples.

### Reference signs

100: an environment of a vehicle;
102: dashboard;
104: camera;
106: microphone;
108: display;
110: loudspeakers;
112: driver's seat;
114: passenger's seat;
116: processing entity;
118: telematic system;
120: acoustic system;
200: reinforcement learning arrangement;
210: environment engine;
220: interpreting engine;
222: state determination;
224: reward;
230: machine learning engine;
232: action or output from the machine learning engine;
1000: processing entity;
1200: processing unit;
1100: I/O interface;
1300: memory;
400: method;
S402: receiving, by the processing entity, sensor data from at least one sensor of a vehicle;
S404: applying, by the processing entity, the sensor data to a pre-trained machine learning algorithm for personalising an output provided to the vehicle cabin;
500: operation modes;
502: Mode-0: Inference;
504: Mode-1: Reinforcement Learning;
506: Mode-2: Supervised Learning;
508: chaining modes;
6100: an example of inferencing;
6200: an example of reinforcement learning;
6300 an example of supervised learning;
602: personalisation parameters;
604: pre-processing;
606: environment state (input to the machine learning algorithm);
608: reward (GUI App/passive output);
610: action (output of the machine learning algorithm);
612: environment evaluation (driver/algorithm);
614: training target (e.g., audio, text label);
616: output parameter/signal (e.g., manually set by user);
620: machine learning algorithm;
700: GUI;
702: regenerate;
704: quit.

The description of embodiments has been presented for purposes of illustration and description. Suitable modifications and variations to the embodiments may be performed in light of the above description or may be acquired from practicing the methods.

For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennae, switches, actuators, clock circuits, etc. The methods described and associated actions may also be performed in various orders in addition to the order described in this application, in parallel, and/or simultaneously. The systems described are exemplary in nature, and may include additional elements and/or omit elements.

The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated (e.g., a processor does not exclude plural of processors). Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. A computer implemented method (400) carried out by a processing entity (1000; 116) of a vehicle cabin, wherein the processing entity comprises at least one computer processor, the method comprising the steps of:
receiving (S402), by the processing entity, sensor data from at least one sensor of a vehicle; and
applying (S404), by the processing entity, the sensor data to a pre-trained machine learning algorithm for personalising an output provided to the vehicle cabin.

2. The computer implemented method of claim 1 for an acoustic system of the vehicle, wherein the output is an audio output, and wherein personalising comprises predicting by the pre-trained machine learning algorithm at least one characteristic of the audio output based on the sensor data.

3. The computer implemented method of claim 1 for a telematic system of the vehicle, wherein the output is a video output, and wherein personalising comprises predicting by the pre-trained machine learning algorithm at least one characteristic of the video output based on the sensor data.

4. The computer implemented method of claim 1 for a driver assistance system, ADAS, wherein the output comprises at least one control parameter to control a component of the vehicle; and wherein personalising comprises predicting, based on the sensor data, by the pre-trained machine learning algorithm the at least one control parameter.

5. The computer implemented method of claim 2, wherein personalizing the audio output comprises:
generating a music recommendation.

6. The computer implemented method of claim 3, wherein personalizing the video output comprises:
generating a video recommendation.

7. The computer implemented method of any one of the preceding claims, wherein the sensor data comprises information about an environment of the vehicle, status and/or actions of an occupant of the vehicle.

8. The computer implemented method of any one of the preceding claims further comprising determining, from the sensor data, at least one personalisation parameter comprising at least one of:
head unit information including information from an audio system of the vehicle;
biometric information of at least one vehicle occupant;
occupant monitoring information including occupant presence, facial features of the at least one occupant and/or driver's status; and
dashboard information;
and providing the at least one personalisation parameters as an input to the machine learning algorithm for personalizing the output.

9. The computer implemented method of any one of the preceding claims, wherein the at least one sensor is any one of:
at least one microphone detecting acoustic signals from the vehicle cabin;
at least one display receiving input from an occupant of the vehicle;
at least one camera imaging an interior of the vehicle cabin;
at least one sensor measuring vehicle's parameters and/or driver's response during driving; and/or
at least one pressure sensors detecting occupants' presence.

10. The computer implemented method of any one of the preceding claims, further comprising reinforcement learning and/or supervised learning, wherein, optionally, the supervised learning comprises labelling sensor data.

11. The computer implemented method of claim 10, wherein the reinforcement learning comprises receiving, by the processing entity, feedback from an interpreting engine and providing, by the processing entity, the feedback to the machine learning algorithm.

12. The computer implemented method of claim 11, further comprising:
receiving, by the interpreting engine via a computer interface, the feedback from an occupant of the vehicle, wherein the occupant is a driver and/or a passenger of the vehicle,
or generating, by the interpreting engine, the feedback based on a rule-based computer algorithm.

13. A processing entity (1000; 116) comprising at least one computer processor configured to carry out the method steps of anyone of the preceding claims.

14. A computer program product comprising computer readable instructions, stored on an electronic storage medium (1300), that, when executed by a processing entity (1000; 116), cause the processing entity (1000; 116) to carry out the method steps according to any one of claims 1-10.

15. A vehicle comprising the processing entity of claim 13.
